# EUROPEAN PATENT APPLICATION

(11) **EP 1 393 980 A2**
(43) Date of publication of application: **03.03.2004**
(21) Application number: 03255181.4
(22) Date of filing: 21.08.2003
(51) Int. Cl.: B60R 11/02

(54) **Holder for mobile telephone**

(30) Priority: 27.08.2002 GB 0219881
(71) Applicant: Matsushita Electric Industrial Co., Ltd., Kadoma-shi, Osaka-fu 571-8501 (JP)
(72) Inventor: Bolt, Sidney Joseph, Marlborough Wiltshire SN8 1SL (GB)
(74) Representative: Dawson, Elizabeth Ann

(57) **Abstract**

A cradle type telephone holder has claws for engaging the telephone having integral release means. The claws can be formed as a one piece member, optionally integral with the cradle itself.

## Description

### Background

For safety reasons it is necessary for mobile phones to be fixed securely within motor vehicles. Desirable features of holders for portable communication devices such as mobile phones are light weight, simple construction and ease of manufacture and assembly. The holders should be compact and unobtrusive when fixed in a vehicle.

Usually holders are model specific such that correct engagement within and easy release from the holder can be expected only for a particular phone type or range. A prior art example is described in EP 1 164 055.

Various attempts have been made to provide a universal holder to accommodate a large range of different types of telephones or similar sized objects. These universal holders tend to be complicated, relatively expensive, bulky and less effective generally than the model specific holders. An example of a universal holder is given in US 6 073 901.

It is convenient for the user to be able to adjust the position of the cradle of the holder with respect to its attachment so that the presentation of the user interface is optimised. A ball and socket joint is often used to allow movement of the cradle with respect to the attachment. A prior art ball and socket joint is described in GB 2 348 076.

### This invention

The present invention provides a telephone holder comprising a cradle for supporting a telephone, means for moving the cradle on a support surface, and means for releasably engaging the telephone comprising a pair of claws positioned on opposite sides of the cradle and resiliently biased against the telephone in use, each claw having an integral actuating member for overcoming the biasing force to release the telephone.

As a result of the actuating members being integral with the claws, they act directly on the claws to achieve their release without the need for any intermediate items such as springs etc. which are used in some prior art arrangements.

The actuating members may simply comprise projections extending away from the claws and operable by finger pressure to pivot the claws out of engagement with the telephone. Preferably the pair of claws are integrally formed as a single member. This single member advantageously comprises a central portion which is attached to the cradle, and a pair of flexible legs from which the claws extend. It is desirable to provide a stop member for each of the actuating members to limit their movement in the direction releasing the telephone, so as to avoid undue stress on the flexible legs. The stop members may be integrally formed with the claws and their respective actuating members.

The claws are preferably located on the outside of the cradle. In a preferred embodiment of the invention the claws engage the telephone via recesses in the cradle. The telephone may also be provided with recesses which receive the claws.

Additional preferred features of the invention are described in the attached subsidiary claims and will become apparent from the following description.

An embodiment of the invention will now be described by way of example only and with reference to the accompanying drawings in which:
Figure 1 is an exploded view of the holder;

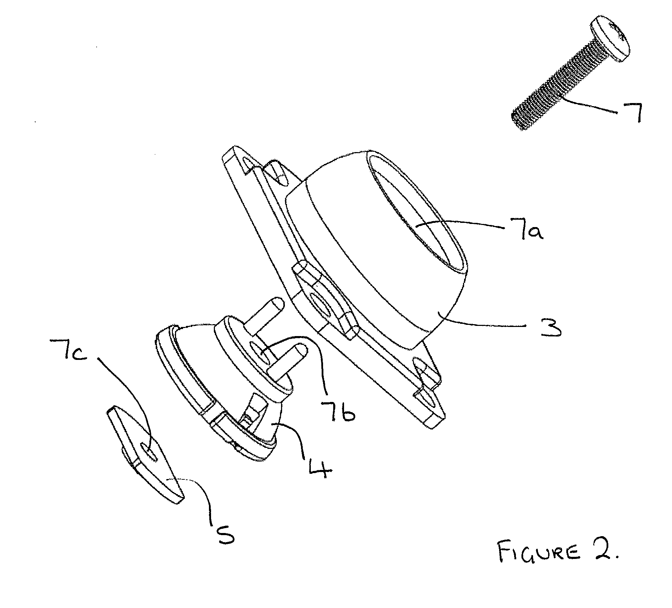

Figure 2 is an exploded view of a ball and socket connection used to attach the holder to its mounting means;
Figure 3 is a perspective view of an integrally formed claw member;
Figures 4 and 5 are perspective views showing a telephone mounted in the holder;
Figures 6 and 7 are perspective views showing the underneath of the holder.

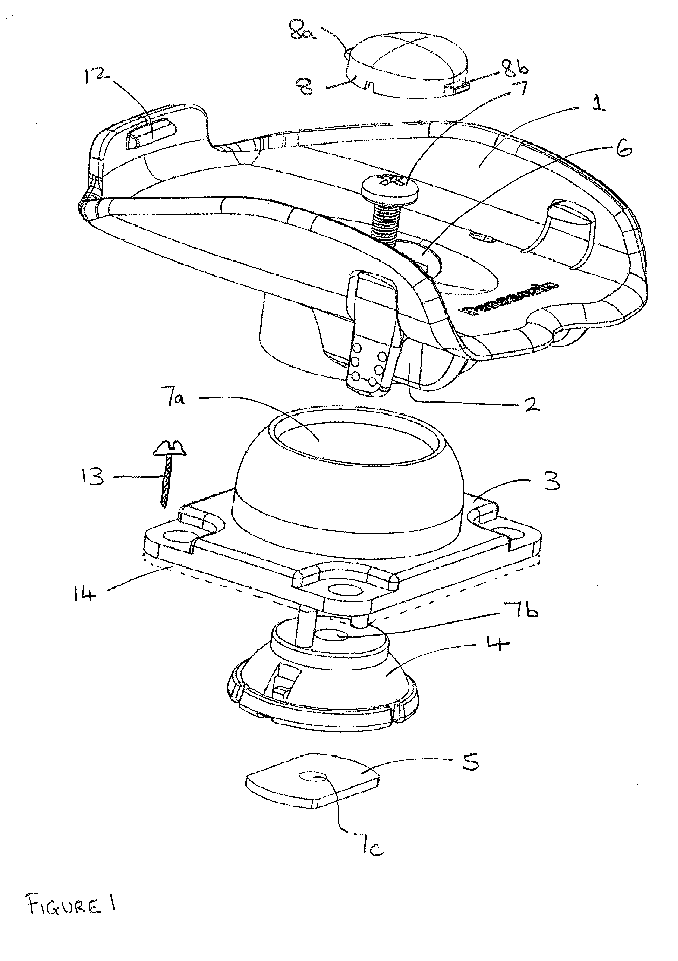

With reference to figure 1 the components of the holder are illustrated, namely a cradle 1, claw member 2 , socket and attachment section 3, ball 4 and steel plate 5. The components 1, 2, 3 and 4 are fabricated as mouldings of a plastic material such as PC/ABS.

A metal bolt 7 carrying a screw thread passes through a hole in the middle of a circular recess 6 and through apertures 7a and 7b and is screwed into the tapped hole 7c. Thus the cradle 1 is able to take up various orientations with respect to the section 3.

A rubber pad 8 fits into the recess 6 and is retained by lugs 8a and 8b within corresponding slots (not shown) in the periphery of circular recess 6.
A locating projection 12 is located within a corresponding slot in the telephone housing when the telephone is stowed in the cradle 1.

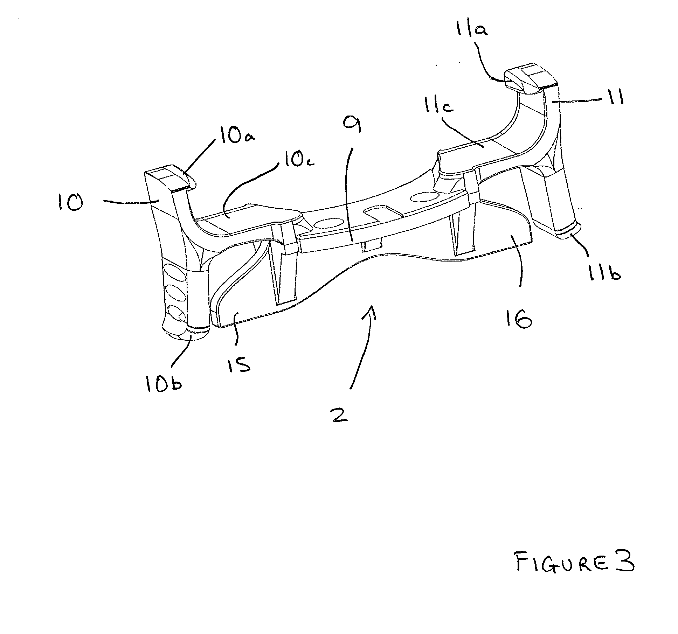

The claw member 2 is shown more clearly in figure 3 and comprises a central support bracket 9 from which depend two claws 10 and 11. Projections 10a and 11a extending from claws 10 and 11 rest within corresponding slots in the telephone housing when the telephone is mounted in the cradle 1. Each claw has an integral projecting actuating member 10b, 11b and is attached to the central support bracket 9 by a flexible leg portion 10c, 11c. It will be appreciated that inward pressure on the distal ends of members 10b, 11b will cause the claws to pivot with respect to the bracket 9. Conversely, as the telephone is pushed into the cradle 1, it pushes against projections 10a and 11a to force the top parts of the claws (proximate projections 10a and 11a) outward in the direction shown as X.

The distal ends of the members 10b and 11b are pushed toward the central support bracket 9 when the telephone housing enters the cradle 1. The members 10b and 11b then spring back to the position shown when projections 10a and 11a enter their corresponding slots in the telephone housing as a result of the resilience of the material from which the claw member is fabricated.

When the telephone is to be released from the holder, finger pressure on members 10b and 11b forces projections 10a and 10b from the slots in the telephone housing. The rubber pad 8 (figure 1) protects against the ingress of dust and moisture and is compressed when the telephone is mounted in cradle 1 such that it pushes against the telephone. When projections 10a and 11a are forced from their slots in the telephone housing the pressure from rubber pad 8 pushes the telephone away from cradle 1. The central support bracket 9 is profiled at 15, 16 to provide a stops to limit the movement of members 10b, 11b and avoid straining of claws 10, 11.

In this embodiment the claw member 2 is fabricated as a single piece moulding and central support bracket 9 is attached to cradle 1 by e.g. heat staking. The claw member may, however, be fabricated as an integral part of the moulding of cradle 1.

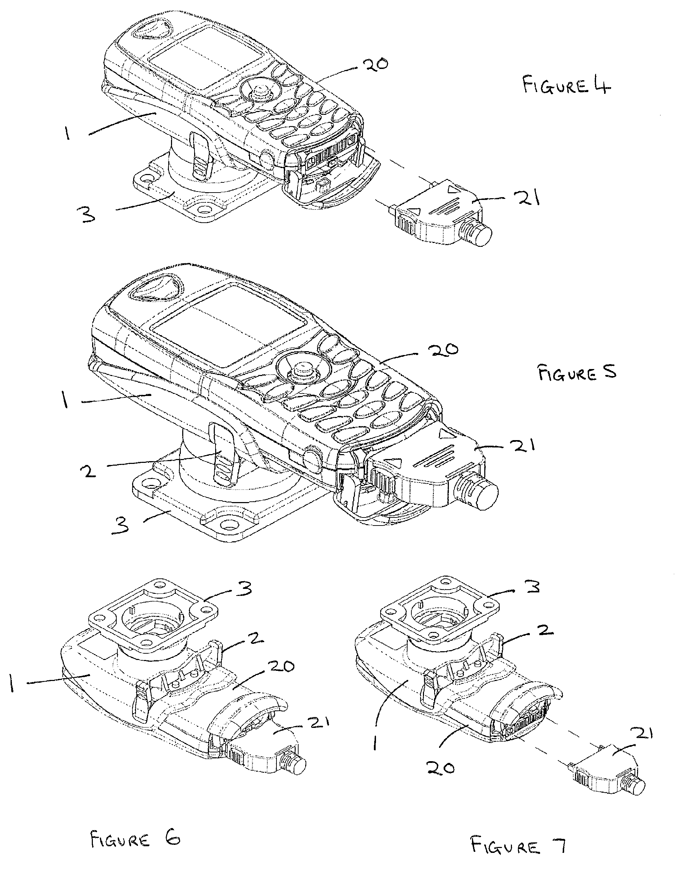

Attachment of the holder to a surface is by means of screws 13 or adhesive pad 14. The usual mounting position in a vehicle would be vertically in the dash board area. The ball and socket arrangement provides three degrees of movement so that the cradle may be adjusted for user preference. Figures 4 to 7 show a telephone 20 mounted in the cradle with the connection of a charging connector 21 which could be supplied from the cigar lighter socket of a vehicle.

As is most clearly visible in Figure 7, the member 2 is attached to the cradle 1 so as to be spaced from the ball and socket connection 3, 4.

The centre of gravity of the telephone should in the stowed position be beyond the axis of the clip support mounting 2 in the direction of projection 12. Single handed release is made easier than is normal because the part of the telephone extending from the cradle is cupped in the palm of the user before release. Release of the telephone would normally be effected by pressure on the clips from the thumb and forefinger of one hand and would be assisted by the action of rubber pad 8.

If it is required to place a different model of telephone within the holder then the attachment section can remain in place and a different cradle fitted to it.

The aforedescribed telephone holder has the following advantages:
the greater part of the holder may be fabricated as mouldings of the same plastic material such as PC/ABS.
no obstruction to the user interface elements of the phone
unfettered access to the input/output connector and charging points.
lightweight
few components
compact
- 3 degrees of freedom for cradle

## Claims

1. A telephone holder comprising a cradle for supporting a telephone, means for mounting the cradle on a support surface, and means for releasably engaging the telephone comprising a pair of claws positioned on opposite sides of the cradle and resiliently biased against the telephone in use, each claw having an integral actuating member for overcoming the biasing force to release the telephone.

2. A telephone holder as claimed in claim 1 in which the actuating members comprise projections extending away from the claws and operable by finger pressure to pivot the claws out of engagement with the telephone.

3. A telephone holder as claimed in claim 1 or 2 in which the actuating members are each provided with a stop member to limit their movement in the direction releasing the telephone.

4. A telephone holder as claimed in claim 3 in which the stop members are integral with the claws and their respective actuating members.

5. A telephone holder as claimed in any preceding claim in which the claws are located on the outside of the cradle.

6. A telephone holder as claimed in claim 5 in which the claws engage the telephone via recesses in the cradle.

7. A telephone holder as claimed in any preceding claim in which the pair of claws are integrally formed as a single member.

8. A telephone holder as claimed in claim 7 in which the single member has a central portion which is attached to the cradle, and a pair of flexible legs from which the claws extend.

9. A telephone holder as claimed in claim 7 or 8 in which the claws are integrally formed with the cradle.

10. A telephone holder as claimed in any preceding claim including means for pushing the telephone away from the cradle when the telephone is released.

11. A telephone holder as claimed in claim 10 in which the pushing means comprise a resilient member positioned within the cradle.

12. A telephone holder as claimed in claim 11 in which the pushing means comprise a pad of resilient material.

13. A telephone holder as claimed in claim 12 in which the pad also serves to protect means fixing the cradle to the mounting means.

14. A telephone holder as claimed in any preceding claim in which the mounting means comprise a plate which is secured to the support surface in use.

15. A telephone holder as claimed in claim 14 in which the cradle is attached to the mounting means via a ball and socket connection allowing the cradle to be positioned in various orientations with respect to the support surface.

16. A telephone holder as claimed in any preceding claim in which the cradle is a one-piece member,
